# EUROPÄISCHE PATENTSCHRIFT

(11) **EP 3 263 235 B1**
(45) Veröffentlichungstag und Bekanntmachung des Hinweises auf die Patenterteilung: **20.11.2019**
(21) Anmeldenummer: 17183349.4
(22) Anmeldetag: 14.03.2014
(51) Int. Cl.: B07C 5/36

(54) **VORRICHTUNG UND VERFAHREN ZUM TRANSPORT UND ZUR UNTERSUCHUNG VON SCHNELLLAUFENDEN BEHANDLUNGSGÜTERN**
DEVICE AND METHOD FOR TRANSPORTING AND EXAMINING FAST-MOVING OBJECTS TO BE TREATED
DISPOSITIF ET PROCÉDÉ POUR TRANSPORTER ET EXAMINER DES PRODUITS À TRAITER DÉFILANT À VITESSE ÉLEVÉE

(30) Priorität: 14.03.2013 DE 102013102653
(43) Veröffentlichungstag der Anmeldung: 03.01.2018
(62) Teilanmeldung aus: 14709966.7
(73) Patentinhaber: Finatec Holding AG, 2555 Brügg bei Biel (CH)
(72) Erfinder: KUBALEK, Bernhard, 4588 Unterramsern (CH); MAIBACH, Fridolin, 2553 Safnern (CH); HERMLE, Matthias, 2555 Brügg bei Biel (CH)
(74) Vertreter: Hoppe, Lars

(56) Entgegenhaltungen:
- DE-A1- 4 207 835
- DE-A1- 19 605 133
- DE-U1- 8 903 180
- DE-U1- 29 718 929
- US-A1- 2009 107 896

## Beschreibung

Die vorliegende Erfindung betrifft eine Vorrichtung und ein Verfahren zum Transport und zur Untersuchung von schnelllaufenden, vereinzelten Körpern von Verpackungsbestandteilen und Verpackungsvorläufern mit mindestens einer Mantelfläche und mindestens einer Deckenfläche.

Derartige einzelne Körper, von Verpackungen oder Verpackungsbestandteilen, bzw. Verpackungsvorläufern sind beispielsweise Preforms für Blasformverfahren, PET-Flaschen, Joghurtbecher, Behälter, Deckel, Verschlüsse, Schraubdeckel oder allgemein zylindrische, einseitig geschlossene Hohlkörper, die oftmals als mehrschichtige Kunststoffkörper aufgebaut sind. Diese Körper weisen also mindestens eine Mantelfläche und eine Deckenfläche auf, wobei die Deckenfläche eine Öffnung enthalten kann. Sie können ebenfalls eine zur Deckenfläche überwiegend parallele Bodenfläche aufweisen, sofern diese nicht von der Mantelfläche nach Art eines Kegels oder abgerundeten Kegels gebildet wird, wie es beispielsweise bei Preforms der Fall ist.

Diese Körper müssen in vielen technischen Anwendungen manipuliert und auf ihre Qualität hin untersucht werden. Gerade in der Lebensmittelindustrie müssen aus wirtschaftlichen Gründen in kürzester Zeit große Mengen verpackt werden, wobei ausschließlich mechanisch und optisch fehlerlose Verpackungen oder Verpackungsbestandteile verwendet werden dürfen. Diese müssen zunächst hergestellt, dann vereinzelt und danach auf Fehler kontrolliert werden, woran sich eine Aussonderung der als fehlerhaft erkannten Verpackungen anschließt, bevor die so geprüften Verpackungen an die Verpackungsmaschine für den Verpackungsvorgang herangeführt werden. Hierbei sind mindestens 1.500 einzelne Körper des Behandlungsgutes pro Minute zu bewältigen, so daß pro Körper weniger als 40 ms zur Verfügung stehen, in denen er transportiert, geprüft und ausgesondert werden muß. Bei noch höheren Stückzahlen steht hierfür entsprechend weniger Zeit pro Körper zur Verfügung. Der Vereinzelungs-, Kontroll- und Aussortiervorgang stellt daher einen wesentlichen Engpass des Verpackungsvorganges dar und muss entsprechend schnell und zuverlässig durchgeführt werden.

Eine Vereinzelungsvorrichtung für derartige Verpackungen, bzw. Verpackungsbestandteile ist aus der CH 702 396 A2 bekannt, eine Untersuchungsvorrichtung für bereits vereinzelte Objekte ist aus der EP 2 453 225 A2 bekannt. Schließlich ist aus der DE 20 2005 019 111 U1 ein Riemen für eine Behandlungsmaschine bekannt, in der Flaschen bodenfrei transportiert und beim Transport rotiert werden sollen.

Aus der US 2010/0193332 A1 ist eine Untersuchungs- und Ausscheidevorrichtung bekannt, bei der nicht vereinzeltes Gut von einem Transportband in freiem Wurf ausgeworfen wird und unter dem Blickfeld einer Farbkamera hindurchfliegt. Das in Transportbandbreite fliegende Material wird von einer Druckluftdüsenbrücke überspannt, deren Düsen einzeln ansteuerbar sind, so daß als fehlerhaft erkanntes Gut ausgeblasen werden kann. Als Güter werden vor allem leichte Güter oder solche mit geringer Dichte genannt, wie beispielsweise Tabakblätter, Gewürze, Reis.

Aus der DE 196 05 133 A1 ist eine Inspektionsmaschine für Gefäße mit seitlichen Förderbändern bekannt, bei denen die seitlichen Förderbänder mit unterschiedlichen Geschwindigkeiten betreibbar sind und eine Rotation der Gefäße herbeiführbar ist. Die Gefäße kontaktieren dabei zu jedem Zeitpunkt ein Förderband.

Aus der US 2009/0107896 A1 ist eine Inspektionsvorrichtung für Flaschendeckel bekannt, bei dem die Flaschendeckel über ein Förderband durch ein Inspektionsabschnitt befördert werden, in dem die Deckel durch einen Luftstrom auf Löcher inspiziert werden.

Aus der DE 42 07 835 A1 ist eine Vorrichtung zum Sortieren von Behältern bekannt, bei der die Behälter auf einem Förderband durch eine optische Inspektionseinheit befördert werden und nach Austreten aus dieser je nach Inspektionsergebnis über verschiedene Hilfsförderbänder ausgeschleust werden.

Aus der DE 297 18 929 U1 ist eine Vorrichtung zum Transportieren von Gegenständen zwischen zwei Transportriemen bekannt, bei der die Gegenstände kurzzeitig durch zwei seitliche Transportriemen über eine unter dem Förderweg angeordnete Inspektionseinheit befördert werden.

Aus der DE 89 03 180 U1 ist eine Transportvorrichtung für Gefäße bekannt, bei der auszusortierende Gefäße durch zwei seitliche Förderbänder diagonal aus dem Förderweg aussortierbar sind.

Die vorliegende Erfindung stellt sich vor diesem Hintergrund des Standes der Technik die Verfahrensaufgabe, einen besonders schnellen und zuverlässigen Kontroll- und Aussonderungsschritt vorzuschlagen und die Vorrichtungsaufgabe, eine entsprechende Vorrichtung vorzuschlagen.

Die Verfahrensaufgabe wird durch ein Verfahren zum Transport und zur Untersuchung von vereinzelten, schnelllaufenden zylindrischen, einseitig geschlossenen Hohlkörpern von Verpackungsbestandteilen und Verpackungsvorläufern, nämlich Deckeln, mit mindestens einer Mantelfläche und mindestens einer Deckenfläche auf optische und mechanische Fehlerlosigkeit, bei dem an eine Untersuchungseinheit herantransportierte Körper von dieser in einen Förderweg einer Transportvorrichtung übernommen werden, gelöst, bei dem die Transportvorrichtung mindestens teilweise als Oberführung ausgebildet ist, die die Körper an einer Randlage, also radial weit außen, zuletzt berührt und damit ruhig und frei von Pendelbewegungen oder Schrägstellungen die Körper mittels eines reibschlüssigen, parallelen Bandlaufs boden- und/oder deckenfrei an wenigsten einer, mit einer Steuereinheit verbundenen, Kontrollkamera vorbeiführt, wobei der Förderweg definiert ist durch zwei, um je ein Antriebsrad und ein weiteres Rad umlaufende, angetriebene und vorgespannte Bänder, die Steuereinheit anhand der von der Kontrollkamera stammenden Bilddaten die Fehlerbehaftetheit jedes Körpers feststellt und die Untersuchungseinheit die Körper an eine Aussondereinheit übergibt, wobei entweder die Untersuchungseinheit oder die Aussondereinheit die Körper annähernd im freien Wurf auswirft und wobei die Aussondereinheit die Flugbahnen von als fehlerhaft erkannten Körpern und von als fehlerfrei erkannten Körpern relativ zueinander mittels einer berührungslosen Kraftausübung ändert, wobei die im freien Flug befindlichen Körpern vor der Aussortierung einer seitlichen Kontrolle durch auf ihre Seite blickende Kontrollkameras unterzogen werden, wobei sämtliche Kontrollkameras mit der Steuer- und Auswerteeinheit verbunden sind. Mit großem Vorteil erlaubt dieses Verfahren einen sehr schnellen Gesamtvorgang von Transport, Kontrolle und Aussonderung, insbesondere durch das Ausfördern im Wurf, insbesondere im annähernd freien Wurf. Eine Wurfausförderung verzichtet mit Vorteil auf Gleitbahnen, Leitglieder oder dergleichen, sie ist konstruktiv einfach und mangels beweglicher Teile auch verschleißarm. Die Lage der Flugbahn im Raum ist erfindungsgemäß innerhalb sehr großer Grenzen variabel, erfindungsgemäß kann der Wurfwinkel annähernd null sein, die Wurfbahn also annähernd senkrecht nach unten zeigen, er kann 45° betragen, die Wurfbahn also schräg nach unten zeigen, 90° betragen, die Wurfbahn also etwa gerade sein, aber auch stumpfe Winkel erfassen, die Wurfbahn also schräg nach oben oder sogar steil nach oben zeigen. Durch die Wahl der geeigneten Flugbahn werden unterschiedliche Wurfweiten und Flugzeiten und damit auch unterschiedliche Möglichkeiten für eine Flugbahnänderung eröffnet. Zunächst bevorzugt sind annähernd horizontale oder leicht nach unten gerichtete Würfe. Bevorzugt sind ebenfalls berührungslose Kraftausübungen, beispielsweise mittels eines Druckluftstoßes, da diese ohne zusätzlichen mechanischen Kontakt zu dem einzelnen ausgeworfenen Körper auskommen und daher diesen auch nicht beschädigen. Da die Körper des Behandlungsgutes dieselben geometrischen Formen, dieselbe Masse und dieselbe Geschwindigkeit haben, ist auch ihre jeweilige Flugbahn gleich, daß heißt, nur innerhalb sehr eng begrenzter Parameter schwankend. Aufgrund dieser in praktischem Maße identischen Flugbahn ist eine genaue mechanische Führung für den Aussondervorgang nicht erforderlich. Der Steuereinheit steht derjenige Zeitraum pro bewegtem Körper des Behandlungsgutes zur Verfügung, der zwischen Bildaufnahme und Eintritt in den Wirkbereich der Aussondereinheit liegt. Da im freien Flug außer der Schwerkraft keine weiteren Kräfte auf die Gegenstände einwirken, ist eine Kraftausübung auf die Gegenstände in Richtung der Schwerkraft besonders wirksam, um die jeweilige Flugbahn zu verändern. Erfindungsgemäß kann die Krafteinwirkung jedoch auch in jedem anderen Winkel zur Schwerkraft erfolgen, ausdrücklich auch seitlich oder entgegengesetzt dazu, also flugbahnverlängernd. Zusätzlich zu dem bereits genannten berührungslosen Mittel, versteht die Erfindung unter berührungslos alle Maßnahmen, die ohne unmittelbaren mechanischen Kontakt zwischen Aussondereinheit und Behandlungsgut auskommen, also beispielsweise die Einwirkung von elektrischen oder magnetischen Felder oder von Druckwellen. Unter Kontrollkamera versteht die Erfindung zunächst jede Art von optischen (Tageslicht)Kameras, jedoch auch IR-Kameras oder andere, schnell arbeitende Bildaufnahmesysteme. Die Erfindung versteht unter Kontrollkamera darüber hinaus jeglichen anderen Sensor, der relevante Eigenschaften des Körpers erfaßt, wie beispielsweise Farbsensoren, die das Vorhandensein einer Farbe und deren Parameter erkennen, also auch Sensoren, die beispielsweise die Maßhaltigkeit der Körper erkennen können. Letztere können beispielsweise Messfühler, Dehnstreifen, Kontaktsensoren oder dergleichen sein, die bei Nichteinhaltung der geforderten Maße ein entsprechendes Signal an die Steuereinheit senden, das nicht notwendigerweise ein Bild sein muss sondern sogar nur ein reines Ja/Nein-Signal sein kann. Bei bestimmten Anwendungen ist die Verwendung einer IR-Kamera, insbesondere einer gekühlten IR-Kamera von großem Vorteil, da diese körpergenaue Aufnahmen in kürzester Folge ermöglicht, so daß Verarbeitungsgeschwindigkeiten von mehr als 2500 Körper/min erreicht werden. Die gekühlte IR-Kamera benötigt dabei weniger als 0,5 ms für eine Aufnahme, stellt also keinen Verarbeitungsengpaß dar und erlaubt es, im sichtbaren Licht nicht sichtbare Strukturen der Körper zu kontrollieren. Genannt seien hier EVOH-Schichten oder dergleichen mehr. Die Erfindung verwendet dabei mindestens eine Kontrollkamera, jedoch sind auch vier oder mehr Kontrollkameras üblich, sofern die geometrische Struktur der Körper nur durch eine Mehrzahl an Kameras ausreichend erfaßt werden kann. Die Kontrollkameras sind dabei an den von ihnen jeweils zu beobachten Abschnitt des Körpers auszurichten, also seitlich, schräg oder senkrecht blickend anzuordnen, die Abfolge der Blickrichtungen während des Transports der Körper ist frei wählbar, eine Bodenkontrolle muss nicht zwingend vor einer Seitenkontrolle erfolgen oder gar unbedingt vorhanden sein. Von den genannten berührungslosen Kraftausübungen ist besonders der Druckluftstoß bevorzugt. Dieser ist aufgrund der Kürze der zur Verfügung stehenden Zeit pro Körper des Behandlungsgutes ideal, da hierzu lediglich ein Ventil geöffnet und geschlossen werden muss. Mit großem Vorteil werden beweglichen Teile vermieden, die zeitintensiv wieder auf ihre Ausgangsposition zurückgeführt werden müssten. Auch eine mechanische Beeinflussung der Flugbahn durch Anschlags- oder Führungskanten wird mit Vorteil vermieden, es kann kein Abrieb, kein Verklemmen oder dergleichen geben. Schließlich steht Druckluft üblicherweise problemlos an jedem Aufstellort der Vorrichtung, bzw. an jedem Einsatzort des Verfahrens zur Verfügung. Aufgrund der sich im unteren Millisekundenbereich bewegenden Reaktionszeit sind jedoch nicht sämtliche Druckluftventile geeignet, diese müssen vielmehr entsprechend geringe Öffnungs- und Schließzeiten aufweisen, auch muss ein ausreichend großer Startdruck vorhanden sein. Schließlich sollte die auf das Behandlungsgut auftreffende Luftmenge bis dahin weder stärker aufgefächert worden sein, noch einen allzu langen Weg zurückgelegt haben, um so impulsartig ortsgenau aufzutreffen und ausschließlich das jeweilige gewünschte Behandlungsgut zu beeinflussen. Dies ist besonders wichtig, da im Gegensatz zu Vorrichtungen für nicht vereinzelte Massengüter wie Reiskörner, Tabakblätter oder dergleichen eine körpergenaue Aussonderung erforderlich ist, um den Ausschuß so gering wie möglich zu halten und vor allem, um die wesentlich größeren Körper des erfindungsgemäßen Verfahrens bzw. der Vorrichtung ausreichend mit Kraft zur Flugbahnänderung beaufschlagen zu können. Ein verwendbares Ventil muss daher diese Eigenschaften aufweisen. Das Verfahren ermöglicht durch die Verwendung einer Vielzahl von Kontrollkameras die vollständige Oberflächenkontrolle der zu behandelnden Körper, insbesondere auch durch Einsatz von mehr als zwei Sensoren/Kontrollkameras. Die Kontrolle ist erfindungsgemäß durch schnelle Tageslichtkameras genauso möglich, wie durch sehr schnell arbeitende gekühlte IR-Kameras, die Belichtungszeiten von wenigen Hundert Mikrosekunden aufweisen und die jeden einzelnen Körper des Behandlungsgutes exakt und positionsgenau erfassen. Letztere werden besonders dann erfindungsgemäß vorgesehen, wenn die Körper auf die Güte einer im sichtbaren Licht nicht erkennbaren Sperrschicht kontrolliert werden müssen. Der Erfindung kommt es dabei nicht darauf an, ob zunächst eine Boden- oder Deckelseite und danach eine Seitenkontrolle der Körper erfolgen oder umgekehrt. Es ist ohne weiteres erfindungsgemäß, im freien Fluge auch die Boden- bzw. Deckelseite mit den Sensoren zu erfassen, wenn vorher die Seiten erfaßt wurden. Ebenso ist es erfindungsgemäß, wenn im freien Fluge kein Sensorik mehr angewandt wird sondern die Oberflächenkontrolle bereits vor dem Aussonderungsschritt in der Untersuchungseinheit mithilfe von dort angeordneten Kameras in Decken-, Boden- und/oder Seitenlage erfolgt ist. Die Aussortierung kann bei der Verbindung sämtlicher Kontrollkameras mit der Steuer- und Auswerteeinheit in einem späteren Stadium des freien Fluges erfolgen. Hierdurch kann mit Vorteil eine Dokumentation der vollständigen Körperoberfläche und damit ein sehr hohes Maß an Qualitätskontrolle erreicht werden. Schließlich ist bei bestimmtem Behandlungsgut auch die auf- und/oder untersichtige Kontrolle wichtig, insbesondere bei Deckeln, da die so beobachtete Stirnfläche gleichzeitig die relevanteste Fläche des Körpers ist, was bereits erläutert wurde.

Erfindungsgemäß wirkt die Aussondereinheit unmittelbar am Ende des Förderweges oder beabstandet zum Ende des Förderweges. Wirkt die Aussondereinheit erfindungsgemäß unmittelbar benachbart zur Untersuchungseinheit, ist die Flugbahn besonders kurz, da eine umgehende Beeinflussung der Flugbahn erfolgt. Durch die so erreichte, sehr kurze Bauweise der Aussonderungseinheit wird keine im Grunde genommen leere Zeit für einen weiteren Transport der Behandlungsgüter zur Aussondereinheit benötigt, vielmehr erfolgt die Aussonderung unmittelbar nach deren Durchlauf durch die Untersuchungseinheit. Im anderen Fall wirft bereits die Untersuchungseinheit die untersuchten Gegenstände im Wurf aus, deren Flugbahn durch den Wirkbereich der Aussondereinheit führt. Diese wiederum verändert dann die Flugbahn der frei fliegenden Körper wie geschildert. Die räumliche Trennung von Untersuchungs- und Aussondereinheit erlaubt mit Vorteil die Zwischenschaltung weiterer Kontrollkameras oder -einrichtungen, die bislang nicht untersuchte Bereiche der Körper ungestört von irgendwelchen Halte- oder Führungsorganen untersuchen. Dies stellt eine gute Ergänzung zu den Untersuchungsmitteln dar, die bereits im Bereich der Untersuchungseinheit eingesetzt wurden. Im freien Flug ist die Körperoberfläche ohne Behinderung zugänglich und damit untersuchbar.

Erfindungsgemäß ist weiter vorgesehen, dass der Förderweg der Untersuchungseinheit die Körper während ihrer Passage durch die Untersuchungseinheit um ihre Längsachse dreht, beispielsweise durch zwei unterschiedliche schnell laufende Bänder. Hierdurch mit wird großem Vorteil eine Prüfung des gesamten Körperumfanges in der Untersuchungseinheit ermöglicht, beispielsweise mit drei oder mehr Aufnahmen entlang des Förderweges dank einer entsprechenden Anzahl an Kameras.

In Ausgestaltung des Verfahrens ist weiter vorgesehen, daß wenigstens eine Flugbahn an einer Trennoberfläche eines Trennkörpers vorbeiführt, insbesondere jede Flugbahn an je einer Trennoberfläche vorbeiführt, wobei beide Trennoberflächen einen Winkel zwischen sich einschließen. Durch diese kontaktfreie Trennvorrichtung wird die Sicherheit des Aussondervorganges mit Vorteil weiter erhöht, da die bereits eingeleitete Flugbahntrennung nicht wieder rückgängig gemacht werden kann, beispielsweise durch unbeabsichtigte Verwirbelungen oder Luftstöße. Die einmal getrennten Körper verbleiben auf ihren durch Trennoberflächen voneinander getrennten Flugbahnen.

Schließlich ist in Weiterbildung des Verfahrens noch vorgesehen, daß nur die als fehlerfrei ermittelten Körper des Behandlungsgutes in ihrer Flugbahn verändert werden. Dies erhöht die Sicherheit des Aussonderungsverfahrens, da im Falle eines Fehlers an der Aussondereinheit alle Behandlungsgüter ausgesondert werden und so keinesfalls ein als schad- oder fehlerhaft erkanntes Behandlungsgut irrtümlich doch zu den als fehlerfrei gewerteten gelangen kann.

Schließlich erfaßt das erfindungsgemäße Verfahren auch eine zweite, der ersten nachgeordnete Aussonderung. Diese sehr vorteilhafte Weiterbildung ermöglicht eine zusätzliche Sicherung gegen fehlerhafte Verfahrensabläufe. Sollte der erste Aussonderungsschritt nicht erfolgreich sein, beispielsweise weil die Kamera, die Datenweiterleitung, die Datenverarbeitung, die Druckluftsteuerung oder ähnliches nicht funktionieren, so verhindert dieser zweite Aussonderungsschritt das fälschliche Freigeben nicht-geprüfter oder fehlerhafter, aber nicht ausgesonderter Körper. Dieser zweite Aussonderungsschritt sperrt erfindungsgemäß die Flugbahn sämtlicher Körper und verhindert so, daß auch nur ein fehlerhaftes Verpackungsteil durchgelassen wird. Das Sperren kann berührungslos, insbesondere per Druckluftstoß, oder berührend geschehen, beispielsweise durch Verfahren eines Arms, einer Sperre oder allgemein eines physischen Körpers in die Flugbahn(en) der Körper. Erfindungsgemäß ist auch, wenn lediglich der als fehlerhaft erkannte, aber im ersten Aussonderungsschritt nicht ausgesonderte Körper ausgesondert wird.

Die Vorrichtungsaufgabe wird bei einer Vorrichtung zum Transport und zur Untersuchung von vereinzelten, schnelllaufenden zylindrischen, einseitig geschlossenen Hohlkörpern von Verpackungsbestandteilen und Verpackungsvorläufern mit mindestens einer Mantelfläche und mindestens einer Deckenfläche, nämlich Deckeln, auf optische und mechanische Fehlerlosigkeit, aufweisend eine Untersuchungseinheit, wobei die Untersuchungseinheit wenigstens eine Kontrollkamera und eine mit dieser verbundenen Steuereinheit sowie eine Transportvorrichtung aufweist, wobei die Transportvorrichtung die Körper boden- und/oder deckenfrei mittels eines reibschlüssigen parallelen Bandlaufs an wenigsten einer Kontrollkamera der Untersuchungseinheit ruhig und frei von Pendelbewegungen oder Schrägstellungen, vorbeitransportierend ist und mindestens teilweise als Oberführung ausgebildet ist, die die Körper an einer Randlage, also radial weit außen, zuletzt berührend ist wobei die Transportvorrichtung zwei, um je ein Antriebsrad und ein weiteres Rad umlaufende, angetriebene und vorgespannte Bänder aufweist, die zwischen sich einen Förderweg definierend sind wobei die Transportvorrichtung die vereinzelten und einander nicht kontaktierenden Körper an der wenigstens einen Kontrollkamera vorbei transportierend ist, wobei die Steuereinheit die Fehlerbehaftetheit jedes Körpers anhand der von der wenigstens einen Kontrollkamera stammenden Bilddaten ermittelnd ist, und weiter aufweisend eine mit der Untersuchungseinheit funktionsmäßig verbunden ausgebildeten Aussondereinheit, wobei die Aussondereinheit die von der Untersuchungseinheit stammenden Körper übernehmend ist, wobei entweder die Untersuchungseinheit oder die Aussondereinheit die Körper im freien Wurf auswerfend ist, wobei die Aussondereinheit die Flugbahnen von als fehlerhaft erkannten Körpern und von als fehlerfrei erkannten Körpern relativ zueinander mittels einer berührungslosen Kraftausübung beeinflussend ist, und wobei die im freien Wurf ausgeworfenen Körper vor der Aussortierung einer seitlichen Kontrolle durch auf ihre Seite blickende Kontrollkameras unterzogen werden, wobei sämtliche Kontrollkameras mit der Steuer- und Auswerteeinheit verbunden sind. Ein Bandtransport, bei dem zwei Bänder zwischen sich einen Förderweg definierend sind, erlaubt ein weiches, beschädigungsfreies Führen der Körper unter ausreichender Klemmkraft, so daß die Körper drehfest geführt und eine zweifelsfreie Aufnahme ermöglichend sind. Der Abstand der beiden Bänder im Förderweg ist daher etwas geringer als der freie Außendurchmesser der Körper. Durch umlaufende Bänder können konstruktiv einfach hohe Transportgeschwindigkeiten erreicht werden, beispielsweise 5m/s. Der erfindungsgemäß vorgesehen Bandtransport hat darüber hinaus den Vorteil, Schwankungen in der Körperzufuhr problemlos zu bewältigen, ein bestimmter Abstand der Körper zueinander wie bei einem Drehteller- oder einem Nesttransport ist nicht erforderlich.

Die weiteren Vorteile dieser Vorrichtung wurden bereits bei der Erläuterung des erfindungsgemäßen Verfahrens erläutert.

Die Transportvorrichtung kann erfindungsgemäß auch, mindestens teilweise, als Oberführung ausgebildet sein, also die Körper an deren Deckfläche halten, beispielsweise als Vakuumband. In jedem Fall muss die Transportvorrichtung die Körper ruhig vor der Kamera vorbeiführen, also Pendelbewegungen oder Schrägstellungen unbedingt vermeiden. Ist sie vor der Kamera als Oberführung ausgebildet, so ist erfindungsgemäß vorgesehen, sie an ihrem kameraseitigen Ende keilförmig oder schwalbenschwanzförmig auslaufend zu gestalten. Die genannten Formen ergeben sich jeweils in Auf- bzw. Untersicht. Hierdurch wird erreicht, daß die Körper günstig an einer Randlage, also radial weit außen, zuletzt berührt werden, im zweiten Fall erfolgt die Berührung sogar symmetrisch. Hierdurch werden für die Aufnahme der Oberseite der Körper oder deren Unterseite ungünstige Schrägstellungen oder Bewegungen vermieden, was insbesondere bei Preforms besonders wichtig ist. Sollen lediglich Seitenkameras eingesetzt werden, kann die gesamte Transportvorrichtung als Oberführung ausgebildet sein. In diesem Fall ist die genannte Endform im Bereich der Übergabe an die Aussondereinheit vorzusehen, um stets gleiche Fluglagen der Körper zu gewährleisten.

In Ausgestaltung der Erfindung ist vorgesehen, die Bänder der Transportvorrichtung mit zueinander unterschiedlicher Geschwindigkeit umlaufend sind. Die Vorteile dieser Ausgestaltung wurden bereits weiter oben erläutert.

Erfindungsgemäß ist weiter vorgesehen, dass mindestens ein Band als Zahnriemen ausgebildet ist, vorzugsweise beide Bänder und/oder ein Rad als Führungsrad und/oder ein Rad als zweites Antriebsrad und/oder wenigstens ein Laufrad pro Band vorgesehen ist. Bei den geforderten hohen Transportgeschwindigkeiten sind allein reibschlüssig angetriebene Bänder auf die Dauer nicht unproblematisch, da deren Oberfläche durch gelegentliche Durchrutscher verglasen kann, so daß Zahnriemen mit Antriebszahnrädern vorteilhafter werden können. Der Einsatz von glatten Bandoberflächen ist erfindungsgemäß jedoch keinesfalls ausgeschlossen. Erfindungsgemäß können ein Antriebs- und ein Führungsrad oder zwei Antriebsräder pro Band vorgesehen sein. Zwischen diesen können ein oder mehrere Laufräder so angeordnet sein, daß diese zu einer gewissen Vorspannung des Bandes führen und dessen Flattern verhindern. Alternativ oder Zusätzlich können die Bänder mittels einer Federkraft vorgespannt sein, beispielsweise, indem die Laufräder radial verschieblich gegen eine Federkraft angeordnet sind.

Schließlich ist noch vorgesehen, dass die Vorrichtung einen Trennkörper zur Trennung von Flugbahnen mit wenigstens einer Trennfläche aufweist, insbesondere mit zwei Trennflächen, die zwischen sich einen Winkel einschließend sind. Dieser Trennkörper verhindert ein Rückvermischen des bereits flugbahngetrennten fehlerlosen- und fehlerbehafteten Behandlungsgutes durch unbeabsichtigte Störungen.

Ist eine zweite, im Flugweg der Körper zur ersten nachfolgende Aussondereinheit vorgesehen, so wird wie geschildert, die Betriebssicherheit der Vorrichtung mit Vorteil erhöht. Sollte die erste Aussondereinheit oder gar die Untersuchungseinheit insgesamt ausfallen, so sperrt die zweite Aussondereinheit die Flugbahn der Körper vollständig und verhindert so, daß die Vorrichtung fehlerhafte Körper freigibt. Die gesamte Vorrichtung fährt dann in einen Fehlermodus und muß von einem Bediener nach Behebung der Fehlfunktion aktiv wieder freigegeben werden. Es ist daher ebenfalls erfindungsgemäß, wenn bei der ersten Aussondereinheit eine Untereinheit vorgesehen ist, die das tatsächlich erfolgte Aussondern eines Körpers überprüft. Dies kann beispielsweise mittels einer vom ausgesonderten Körper zu durchquerenden Lichtschranke, einem drucksensitiven Feld, auf das der Körper aufprallt oder dergleichen mehr realisiert werden. Wenn also ein als fehlerhaft erkannter Körper diese beispielhafte Lichtschranke nicht durchquert, ist die erste Aussonderung gescheitert und die beschrieben zweite Aussonderungseinheit wird aktiv. Alternativ ist erfindungsgemäß auch vorgesehen, die Flugbahn der fehlerfreien Körper zu überwachen. Das bedeutet, daß die zweite Aussonderung aktiv wird, wenn ein Körper durch die Lichtschranke fliegt, der eigentlich vorher hätte ausgesondert werden sollen. Die zweite Aussondereinheit wird auch aktiv, wenn die Kamera beispielsweise keine Bilder liefert oder ein anderer Fehler stromaufwärts der zweiten Aussondereinheit vorliegt und sie diesen Fehler gemeldet erhält. Es ist auch erfindungsgemäß, wenn die zweite Aussondereinheit lediglich als Backup der ersten Aussondereinheit arbeitend ist und bei korrekt arbeitender Fehlererkennung durch Kamera und Steuerung jedoch lediglich nicht erfolgter Aussonderung des fehlerbehafteten Körpers in der ersten Aussondereinheit diesen Körper dann, beispielsweise wiederum per Druckluftstoß oder per mechanischer Kontaktierung, aussondernd ist.

In Ausgestaltung der Erfindung ist vorgesehen, dass die wenigstens eine Kontrollkamera gewählt ist aus den Tageslichtkameras, den IR-Kameras, den gekühlten IR-Kameras, den Farbsenoren, den Sensoren zur Bestimmung der Einhaltung eines oder der äußeren Maße eines Körpers oder aus mehreren der genannten. So kann die passende Kontrollkamera je nach Verwendungszweck im Zusammenhang mit der erfindungsgemäßen Vorrichtung verwendet werden.

Schließlich ist erfindungsgemäß noch vorgesehen, dass die Untersuchungseinheit einen zweiten Förderweg aufweist, in dem die Körper boden- und/oder deckenseitig geführt sind, wobei dieser Förderweg an wenigstens einer auf die Körper blickenden Kontrollkamera vorbeiführend ist. Dieser zweite Förderweg kann sich unmittelbar an den ersten anschließen oder prozeßtechnisch vor diesem angeordnet sein. In beiden Fällen ist ein Übergabebereich zwischen den beiden Förderwegen vorzusehen. Wichtig ist der Erfindung, daß eine Kontrolle der Körper auch bereits vor der eigentlichen Untersuchungseinheit erfolgen kann, besonders, wenn dies zu einer kürzeren Baulänge der Vorrichtung führt oder aufgrund einer körperbedingt benötigten längeren Verarbeitungszeitspanne erforderlich ist.

Die zuvor genannten Merkmale erreichen mit großem Vorteil eine schnelle und zuverlässig arbeitende Vorrichtung bei geringem konstruktivem Aufwand.

Weitere Einzelheiten, vorteilhafte Weiterbildungen und eine bevorzugte Ausführungsform werden nachstehend anhand der Figurenbeschreibung näher erläutert. Hierbei zeigen
- Fig. 1:: eine skizzenhafte Seitenansicht einer erfindungsgemäßen Vorrichtung und
- Fig. 2:: eine Untersicht auf eine erfindungsgemäße Untersuchungseinheit.

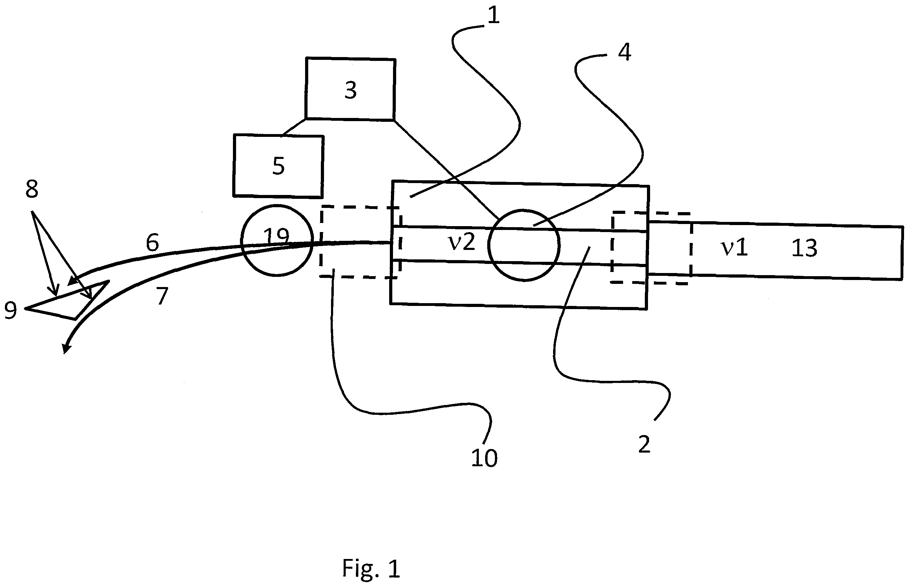

**Fig. 1** zeigt eine skizzenhafte Seitenansicht einer erfindungsgemäßen Ausführungsform der Erfindung. Auf der rechten Seite ist eine Zufuhrvorrichtung 13 dargestellt, die das Behandlungsgut von einer nicht dargestellten ersten Vereinzelungsvorrichtung übernimmt und als kontinuierlichen Strom von sich kontaktierenden Körpern 21 an die Untersuchungseinheit 1 übergibt und hierbei endgültig vereinzelt, so daß die Körper 21 sich nicht mehr kontaktieren. Diese Zufuhrvorrichtung 13 transportiert die Körper 21 mit einer ersten Geschwindigkeit entweder aufstehend auf einem Band oder hängend an einem Vakuumband. Zur endgültigen Vereinzelung kann ein zweiter, beschleunigender Transportabschnitt vorgesehen sein, der die Körper auf eine zweite Geschwindigkeit beschleunigt, nämlich diejenige, die in der Untersuchungseinheit 1 herrscht. Die Körper sind dabei wie geschildert Verpackungen oder Verpackungsvorläufer wie Preforms, Deckel, Becher oder dergleichen mehr. Die Untersuchungseinheit 1 weist eine Kontrollkamera 4 auf, die in diesem Beispiel als Tageslicht oder gekühlte IR-Kamera ausgebildet ist. Andere bildgebende Sensoren als auch andere Sensoren sind wie beschrieben ebenfalls erfindungsgemäß. Die Kontrollkamera 4 blickt von oben oder unten auf die Stirnseite der Körper 21 des Behandlungsgutes und ist mit einer Steuereinheit 3 wirk- und datenmäßig verbunden. Diese Steuereinheit 3 erhält Daten der Kamera 4, nämlich Aufnahmen von einzelnen Körpern 21 des Behandlungsgutes, und vergleicht diese mit Sollwerten. Je nach Behandlungsgut ist die Kontrollkamera 4 eine Tageslichtkamera oder eine, insbesondere gekühlte, IR-Kamera. Mit letzterer kann das Vorhandensein, die Vollständigkeit und die Dicke einer (EVOH)Sperrschicht in jedem Körper ermittelt werden. Die Steuereinheit kann je nach Behandlungsgut auch das Vorhandensein und die Güte andere Schichten im Wandmaterial der Körper ermitteln. Die Körper werden durch die Untersuchungseinheit 1 entlang eines Förderweges 2 transportiert, der unter / über der Blickachse der Kamera 4 vorbeiführt. Dieser Förderweg kann erfindungsgemäß zwei unterschiedlich schnell laufende Bänder 12 aufweisen, so daß der zwischen ihnen geführte Körper 21 während seiner Passage durch die Untersuchungseinheit eine Rotation um seine Längsachse ausführt. Hierdurch können erfindungsgemäß vorgesehene seitlich blickende Kameras den vollen Umfang eines Körpers aufnehmen und kontrollieren lassen. Dies gilt, insoweit die Seitenfläche nicht durch die Bänder verdeckt sind. Am Ende der Untersuchungseinheit 1 ist eine Aussondereinheit 5 so angeordnet, daß sie auf Körper 21 einwirken kann, die die Untersuchungseinheit 1 verlassen haben. Im einfachsten Fall ist die Aussondereinheit 5 unmittelbar nach dem Ende des Förderweges 2 der Untersuchungseinheit 1 vorgesehen, der die untersuchten Körper 21 in diesem Beispiel annähernd im geradem Wurf auswirft. Die Aussondereinheit 5 ist mit der Steuereinheit 3 verbunden ausgebildet und weist ein Ventil 18, insbesondere eine mittels eines Ventils schließbare Düse auf, deren Düsenöffnung auf die Flugbahn der Körper 21 gerichtet ist. Hat die Steuereinheit 3 anhand der Daten der einen oder mehreren Kameras 4 einen Körper 21 als fehlerbehaftet erkannt, schickt sie ein Steuersignal an das Ventil 18, bzw. die Düse und öffnet diese zu einem Zeitpunkt, der so gewählt ist, daß ein aus der Düse austretender Druckluftstoß auf den Körper trifft, wenn dieser in den Wirkbereich 19 der Düse der Aussondereinheit 5 eintritt. Die Steuereinheit berechnet also anhand der Strecke zwischen Wirkbereich 19 und Kamera 4, der Strecke zwischen Düsenöffnung und Wirkbereich 19, der Öffnungs- und Schließzeiten des Ventils, der Transportgeschwindigkeit des Körpers und dessen Flugzeit bis zum Wirkbereich 19 denjenigen Zeitpunkt, an dem das Ventil geöffnet werden muss, damit der Druckstoß den Körper 21 in seiner Flugbahn beeinflussen kann. Die Flugbahn 6 der fehlerhaften unterscheidet sich anschließend von der Flugbahn 7 der fehlerfreien Körper so, dass die sichere Trennung der Körper gewährleistet ist. Zur Erhöhung der Sicherheit ist zwischen den Flugbahnen 6, 7 ein Trennkörper 9 angeordnet, der hier zwei Trennoberflächen 8 aufweist. Gestrichelt und damit optional sind in Fig. 1 zwei Positionen für eine oder mehrere zusätzliche Kameras 10 eingezeichnet, die die Seiten- oder Mantelflächen der Körper ungestört im freien Fluge betrachten. Diese beiden Positionen sind nach oder vor der Position der ersten Kamera 4. Im ersten Fall können die Seitenkamera(s) 10 so angeordnet sein, daß sie die Körper im Fluge beobachten und somit zwischen Wirkbereich 19 der Aussondereinheit 5 und dem Ende des Förderweges 2 der Untersuchungseinheit 1 angeordnet sein. Im letzteren Fall sind die Seitenkamera(s) 10 im Bereich zwischen dem Beginn des Förderweges 2 und dem Ende des Zufuhrweges der Zufuhrvorrichtung 13 wirkmäßig angeordnet. Nicht dargestellt ist eine erfindungsgemäß auch mögliche zweite Aussondereinheit stromabwärts der ersten Aussondereinheit 5. Diese würde, wie zuvor geschildert, entweder als back-up zur ersten Aussondereinheit dienen oder durch Sperren der Flugbahn(en) der Körper sämtliche Körper aussondern und so die Arbeit der gesamten Vorrichtung stilllegen. Diese zweite Aussondereinheit ist bevorzugt in der von der ersten Aussondereinheit üblicherweise nicht beeinflußten Flugbahn angeordnet, da deren Sperrung im Falle von Fehlfunktionen wichtig ist, da diese Flugbahn dann auch fehlerbehaftete Körper enthält. Die zweite Aussondereinheit umfaßt auch eine entsprechende Steuerung und eine Erkennungsvorrichtung für die Wirksamkeit und das Funktionieren der ersten Aussondereinheit, bzw. der gesamten Vorrichtung stromaufwärts. Diese Erkennungsvorrichtung kann erfindungsgemäß sowohl die Flugbahn der ausgesonderten als auch der fehlerfreien Körper überwachen, wie beschrieben.

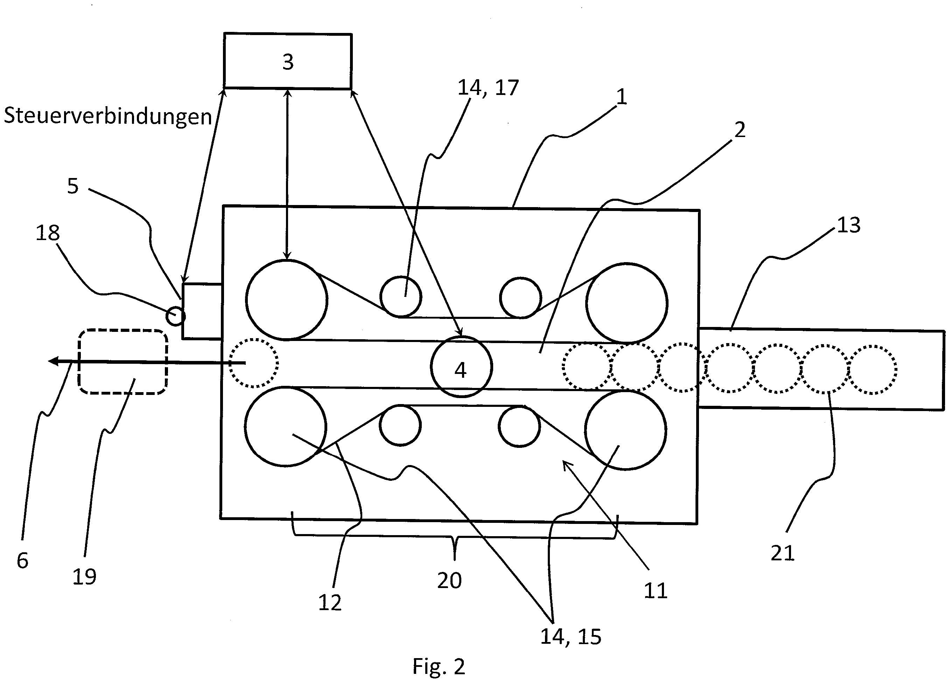

**Fig. 2** zeigt eine erfindungsgemäße Untersuchungseinheit 1 in Untersicht. Gut zu erkennen ist die Kamera 4, die innerhalb eines Förderweges 2 angeordnet ist und von oben auf die an ihr vorbei transportieren Körper des Behandlungsgutes blickt. Eine Zufuhrvorrichtung 13 führt vor- und endvereinzelte Körper in den Wirkbereich des Förderweges 2 ein und beschleunigt diese ggf. auf die im Förderweg 2 herrschende Transportgeschwindigkeit ν₂. Der Transport wird erfindungsgemäß durch zwei Bänder 12 erreicht, die jeweils endlos um zwei Antriebsräder 15 umlaufend sind. Bei diesem Beispiel ist kein Führungsrad vorhanden, ansonsten wäre eines der beiden Antriebsräder 15 eines Bandes 12 als solches ausgebildet. Pro Band 12 sind weiter zwei Laufräder 17 vorgesehen, die das jeweils zugehörige Band 12 so spannend sind, daß dieses trotz der hohen Bandgeschwindigkeiten von 5 m/s nicht flattert. Der eigentliche Förderweg 2 ist gebildet durch einen Abschnitt 20, in dem die beiden Bänder aufeinander zuweisend in etwa parallel laufen. Verwendbare Bänder 12 weisen eine weiche, jedoch raue Oberfläche auf, die dazu geeignet ist, das Behandlungsgut kräftig und schonend zu kontaktieren. Die Weite zwischen den Bändern 12 im Abschnitt 20 ist dabei einstellbar etwas geringer ausgebildet, als der Außendurchmesser des Behandlungsgutes. Die Bänder 12 können Zahnriemen und mehrlagig aufgebaut sein und sie können mit zueinander unterschiedlicher Geschwindigkeit umlaufen. Im dargestellten Beispiel ist bereits die Untersuchungseinheit 1 die Körper im freien waagerechten Wurf auswerfend ausgebildet. Eine Aussondereinheit 5 ist so angeordnet, daß sie die Flugbahn körpergenau beeinflussend und fehlerabhängig verändernd ist.

Mit dieser Erfindung können durchaus 4.500 Körper pro Minute behandelt und kontrolliert werden, jedoch sind auch mehr als 5.000 Körper pro Minute durch die Vorrichtung durchsetzbar. Die Kombination aus vorheriger vollständiger Vereinzelung, schnell laufenden Bändern 12, einer sehr schnellen Bildaufnahme durch eine Tageslicht- oder gekühlte IR-Kamera und eine berührungslos erfolgende Aussonderung der kontrollierten und als fehlerbehaftet erkannten Körper durch eine Veränderung ihrer Flugbahn ist besonders dazu geeignet, derart schnell laufendes Behandlungsgut zu bewältigen.

### BEZUGSZEICHENLISTE

- 1: Untersuchungseinheit
- 2: Förderweg
- 3: Steuereinheit
- 4: Kontrollkamera
- 5: Aussondereinheit
- 6: Flugbahn
- 7: Flugbahn
- 8: Trennoberfläche
- 9: Trennkörper
- 10: Seitliche Kontrollkamera
- 11: Transportvorrichtung
- 12: Band
- 13: Zufuhrvorrichtung
- 14: Rad
- 15: Antriebsrad
- 16:
- 17: Laufrad
- 18: Druckluftventil
- 19: Wirkbereich
- 20: Paralleler Bandabschnitt
- 21: Körper

## Patentansprüche

1. Verfahren zum Transport und zur Untersuchung von vereinzelten, schnelllaufenden zylindrischen, einseitig geschlossenen Hohlkörpern (21) von Verpackungsbestandteilen und Verpackungsvorläufern, nämlich Deckeln, mit mindestens einer Mantelfläche und mindestens einer Deckenfläche auf optische und mechanische Fehlerlosigkeit, bei dem an eine Untersuchungseinheit (1) herantransportierte Körper (21) von dieser in einen Förderweg (2) einer Transportvorrichtung (11) übernommen werden, die Transportvorrichtung (11) mindestens teilweise als Oberführung ausgebildet ist, die die Körper an einer Randlage, also radial weit außen, zuletzt berührt und damit ruhig und frei von Pendelbewegungen oder Schrägstellungen die Körper (21) mittels eines reibschlüssigen, parallelen Bandlaufs boden- und/oder deckenfrei an wenigsten einer, mit einer Steuereinheit (3) verbundenen, Kontrollkamera (4) vorbeiführt, wobei der Förderweg definiert ist durch zwei, um je ein Antriebsrad (15) und ein weiteres Rad (14) umlaufende, angetriebene und vorgespannte Bänder (12), die Steuereinheit (3) anhand der von der Kontrollkamera (4) stammenden Bilddaten die Fehlerbehaftetheit jedes Körpers (21) feststellt und die Untersuchungseinheit (1) die Körper (21) an eine Aussondereinheit (5) übergibt, wobei entweder die Untersuchungseinheit (1) oder die Aussondereinheit (5) die Körper (21) annähernd im freien Wurf auswirft und wobei die Aussondereinheit (5) die Flugbahnen (6, 7) von als fehlerhaft erkannten Körpern (21) und von als fehlerfrei erkannten Körpern (21) relativ zueinander mittels einer berührungslosen Kraftausübung ändert, wobei die im freien Flug befindlichen Körpern (21) vor der Aussortierung einer seitlichen Kontrolle durch auf ihre Seite blickende Kontrollkameras (10) unterzogen werden, wobei sämtliche Kontrollkameras (4, 10) mit der Steuer- und Auswerteeinheit verbunden sind.

2. Verfahren nach Anspruch 1, bei dem die Aussondereinheit (5) unmittelbar am Ende des Förderweges (2) wirkt oder bei dem sie beabstandet zum Ende des Förderweges (2) wirkt.

3. Verfahren nach einem der vorhergehenden Ansprüche, bei dem der Förderweg (2) der Untersuchungseinheit (1) die Körper (21) während ihrer Passage durch die Untersuchungseinheit (1) um ihre Längsachse dreht.

4. Verfahren nach einem der vorhergehenden Ansprüche, bei dem wenigstens eine Flugbahn (6, 7) an einer Trennoberfläche (8) eines Trennkörpers (9) voreiführt, insbesondere jede Flugbahn (6, 7) an je einer Trennoberfläche (8, 8') vorbeiführt.

5. Verfahren nach einem der vorhergehenden Ansprüche, bei dem nur die als fehlerfrei ermittelten Körper (21) in ihrer Flugbahn (6, 7) verändert werden.

6. Verfahren nach einem der vorhergehenden Ansprüche, bei dem eine zweite, im Flugweg der Körper (21) der ersten nachfolgende, Aussonderung erfolgt, sofern die erste Aussonderung nicht erfolgreich war.

7. Vorrichtung zum Transport und zur Untersuchung von vereinzelten, schnelllaufenden zylindrischen, einseitig geschlossenen Hohlkörpern (21) von Verpackungsbestandteilen und Verpackungsvorläufern mit mindestens einer Mantelfläche und mindestens einer Deckenfläche, nämlich Deckeln, auf optische und mechanische Fehlerlosigkeit, aufweisend
a) eine Untersuchungseinheit (1), wobei die Untersuchungseinheit (1) wenigstens eine Kontrollkamera (4) und eine mit dieser verbundenen Steuereinheit (3) sowie eine Transportvorrichtung (11) aufweist, wobei die Transportvorrichtung (11) die Körper (21) boden- und/oder deckenfrei mittels eines reibschlüssigen parallelen Bandlaufs an wenigsten einer Kontrollkamera (4) der Untersuchungseinheit (1) ruhig und frei von Pendelbewegungen oder Schrägstellungen, vorbeitransportierend ist und mindestens teilweise als Oberführung ausgebildet ist, die die Körper an einer Randlage, also radial weit außen, zuletzt berührend ist
wobei die Transportvorrichtung zwei, um je ein Antriebsrad (15) und ein weiteres Rad (14) umlaufende, angetriebene und vorgespannte Bänder (12) aufweist, die zwischen sich einen Förderweg definierend sind wobei die Transportvorrichtung (11) die vereinzelten und einander nicht kontaktierenden Körper (21) an der wenigstens einen Kontrollkamera (4) vorbei transportierend ist, wobei die Steuereinheit (3) die Fehlerbehaftetheit jedes Körpers (21) anhand der von der wenigstens einen Kontrollkamera (4) stammenden Bilddaten ermittelnd ist, und
b) weiter aufweisend eine mit der Untersuchungseinheit (1) funktionsmäßig verbunden ausgebildeten Aussondereinheit (5), wobei die Aussondereinheit (5) die von der Untersuchungseinheit (1) stammenden Körper (21) übernehmend ist, wobei entweder die Untersuchungseinheit (1) oder die Aussondereinheit (5) die Körper (21) im freien Wurf auswerfend ist, wobei die Aussondereinheit (5) die Flugbahnen (6, 7) von als fehlerhaft erkannten Körpern (21) und von als fehlerfrei erkannten Körpern (21) relativ zueinander mittels einer berührungslosen Kraftausübung beeinflussend ist,
und wobei die im freien Wurf ausgeworfenen Körper (21) vor der Aussortierung einer seitlichen Kontrolle durch auf ihre Seite blickende Kontrollkameras (10) unterzogen werden, wobei sämtliche Kontrollkameras (4, 10) mit der Steuer- und Auswerteeinheit verbunden sind.

8. Vorrichtung gemäß Anspruch 7, **dadurch gekennzeichnet, dass** die Oberführung an ihrem kameraseitigen Ende in Untersicht keilförmig oder schwalbenschwanzförmig auslaufend ist.

9. Vorrichtung gemäß Anspruch 7 bis 8, **dadurch gekennzeichnet, dass** die Bänder (12) der Transportvorrichtung (11) mit zueinander unterschiedlicher Geschwindigkeit umlaufend sind.

10. Vorrichtung gemäß Anspruch 7 bis 9, **dadurch gekennzeichnet, dass** mindestens ein Band (12) als Zahnriemen ausgebildet ist, vorzugsweise beide Bänder (12) und/oder ein Rad (14) als Führungsrad und/oder ein Rad (14) als zweites Antriebsrad (15) und/oder wenigstens ein Laufrad (17) pro Band (12) vorgesehen ist.

11. Vorrichtung gemäß einem der Ansprüche 7 bis 10, **dadurch gekennzeichnet, dass** die wenigstens eine Kontrollkamera (4, 10) gewählt ist aus den Tageslichtkameras, den IR-Kameras, den gekühlten IR-Kameras, den Farbsenoren, den Sensoren zur Bestimmung der Einhaltung eines oder der äußeren Maße eines Körpers (21) oder aus mehreren der genannten.

12. Vorrichtung gemäß einem der Ansprüche 7 bis 11, **dadurch gekennzeichnet, dass** die Untersuchungseinheit einen zweiten Förderweg (13) aufweist, in dem die Körper boden- und/oder deckenseitig geführt sind, wobei dieser Förderweg (13) an wenigstens einer auf die Körper blickenden Kontrollkamera (4) vorbeiführend ist.

## Claims

1. Method for transporting and examining separated, fast-moving cylindrical hollow bodies (21) closed on one side, of packaging components and packaging preforms, namely lids, with at least one lateral surface and at least one top surface, for optical and mechanical flawlessness, in which method bodies (21), transported to an examining unit (1), are accepted by the same into a conveying path (2) of a transport device (11), the transport device (11) is designed at least partially as an upper guide, which, in a final step, contacts the bodies at a peripheral edge, thus radially far outward, and then guides the bodies (21) smoothly and free of pendulum movements or inclined positions by means of a frictional, parallel belt transport with the bottom and/or top exposed to at least one inspection camera (4) connected to a control unit (3), wherein the conveying path is defined by two driven and pretensioned belts (12), each circulating a drive wheel (15) and another wheel (14), the control unit (3) determines the defectiveness of each body (21) by means of the image data originating from the inspection camera (4) and the examining unit (1) transfers the bodies (21) to a rejection unit (5), wherein either the examining unit (1) or the rejection unit (5) ejects the bodies (21) in an approximately free flight, and wherein the rejection unit (5) alters the flight paths (6, 7) of the bodies (21) detected to be defective and of the bodies (21) detected to be flawless relative to each other by means of a contactless exertion of force, wherein the bodies (21) located in free flight are subjected to a lateral examination by inspection cameras (10) viewing their sides prior to the rejection, wherein all inspection cameras (4, 10) are connected to the control and evaluation unit.

2. Method according to claim 1, in which the rejection unit (5) functions directly at the end of the conveying path (2) or wherein it functions spaced apart from the end of the conveying path (2).

3. Method according to one of the preceding claims, in which the conveying path (2) of the examining unit (1) rotates the bodies (21) about their longitudinal axis during their passage through the examining unit (1).

4. Method according to one of the preceding claims, in which at least one flight path (6, 7) leads past a separating surface (8) of a separating body (9), in particular each flight path (6, 7) leads past a respective separating surface (8, 8').

5. Method according to one of the preceding claims, in which only the bodies (21) determined to be flawless have their flight path (6, 7) altered.

6. Method according to one of the preceding claims, in which a second rejection is carried out in the flight path of the bodies (21) subsequent to the first rejection, if the first rejection is not successful.

7. Device for transporting and examining separated, fast-moving cylindrical hollow bodies (21) closed on one side, of packaging components and packaging preforms, with at least one lateral surface and at least one top surface, namely lids, for optical and mechanical flawlessness, having
a) an examining unit (1), wherein the examining unit (1) has at least one inspection camera (4) and a control unit (3) connected to the same, and a transport device (11), wherein the transport device (11) moves the bodies (21) with the bottom and/or top exposed by means of a frictional, parallel belt transport past at least one inspection camera (4) of the examining unit (1) smoothly and free of pendulum movements or inclined positions, and the transport device is designed at least partially as an upper guide which, in a final step, contacts the bodies at a peripheral edge, thus radially far outward, wherein the transport device (11) has two driven and pretensioned belts (12), each circulating a drive wheel (15) and another wheel (14) which define a conveying path between themselves, wherein the transport device (11) transports the separated bodies (21), which do not contact each other, past the at least one inspection camera (4), wherein the control unit (3) determines the defectiveness of each body (21) by means of the image data originating from the inspection camera (4), and
b) further having a rejection unit (5), designed as functionally connected to the examining unit (1), wherein the rejection unit (5) receives bodies (21) originating from the examining unit (1), wherein either the examining unit (1) or the rejection unit (5) ejects the bodies (21) into free flight, wherein the rejection unit (5) influences the flight paths (6, 7) of the bodies (21) detected to be defective and of the bodies (21) detected to be flawless, relative to each other, by means of a contactless exertion of force, and
wherein the bodies (21), ejected in free flight, are subjected to a lateral inspection by inspection cameras (10) viewing their sides prior to the sorting, wherein all inspection cameras (4, 10) are connected to the control and evaluation unit.

8. Device according to claim 7, **characterized in that** the upper guide ends at its camera-side end in a wedge shape or dovetail shape when viewed from below.

9. Device according to claim 7 or 8, **characterized in that** the belts (12) of the transport device (11) circulate at different speeds from each other.

10. Device according to any one of claims 7 to 9, **characterized in that** at least one belt (12) is designed as a toothed belt, preferably both belts (12), and/or one wheel (14) is provided as a guide wheel and/or one wheel (14) is provided as a second drive wheel (15) and/or at least one running wheel (17) is provided per belt (12).

11. Device according to any one of claims 7 to 10, **characterized in that** the at least one inspection camera (4, 10) is selected from visual cameras, IR cameras, cooled IR cameras, color sensors, sensors for determining the maintenance of one or the outer dimension of a body (21), or from a plurality of the same.

12. The device according to any one of claims 7 to 11, **characterized in that** the examining unit has a second conveying path (13), in which the bodies are guided on the bottom and/or top side, wherein this conveying path (13) is guided past at least one inspection camera (4) viewing the bodies.

## Revendications

1. Procédé pour le transport et l'examen de corps creux (21) cylindriques individuels à grande vitesse fermés d'un côté, de composants d'emballage et de précurseurs d'emballage, notamment de couvercles, présentant au moins une surface d'enveloppe et au moins une surface de couverture, quant à l'absence de défauts visuels et mécaniques, dans lequel des corps (21) transportés vers une unité d'examen (1) sont transmis de celle-ci vers un trajet de transport (2) d'un dispositif de transport (11), le dispositif de transport (11) est conçu en partie comme un guidage supérieur touchant en dernier les corps au niveau d'une position de bord, donc radialement à l'extérieur, transportant ainsi les corps (21) doucement et donc sans oscillations ni inclinaison, à distance du sol et du plafond, devant au moins une caméra de contrôle (4) reliée à une unité de commande (3) au moyen d'un défilement de bande parallèle à friction, dans lequel le trajet de transport est défini par deux bandes (12) précontraintes et entraînées, circulant respectivement autour d'une roue d'entraînement (15) et d'une autre roue (14), l'unité de commande (3) détermine la défectuosité de chaque corps (21) à l'aide des données d'image provenant de la caméra de contrôle (4), et l'unité d'examen (1) remet les corps (21) à une unité de tri (5), dans lequel l'unité d'examen (1) ou l'unité de tri (5) éjecte les corps (21) quasiment librement et dans lequel l'unité de tri (5) modifie les trajectoires (6, 7) de corps (21) considérés comme défectueux et de corps (21) considérés comme exempts de défauts, l'une par rapport à l'autre par application d'une force sans contact, dans lequel les corps (21) en vol libre sont, avant le tri, soumis à un contrôle latéral réalisé par des caméras de contrôle (10) orientées vers leur côté, dans lequel toutes les caméras de contrôle (4, 10) sont reliées à l'unité de commande et d'évaluation.

2. Procédé selon la revendication 1, dans lequel l'unité de tri (5) agit directement à la fin du trajet de transport (2) ou dans lequel celle-ci agit à une distance de la fin du trajet de transport (2).

3. Procédé selon l'une des revendications précédentes, dans lequel le trajet de transport (2) de l'unité d'examen (1) fait tourner les corps (21) autour de leur axe longitudinal pendant leur passage à travers l'unité d'examen (1).

4. Procédé selon l'une des revendications précédentes, dans lequel au moins une trajectoire (6, 7) passe devant une surface de séparation (8) d'un corps de séparation (9), en particulier chaque trajectoire (6, 7) passe respectivement devant une surface de séparation (8, 8').

5. Procédé selon l'une des revendications précédentes, dans lequel seuls les corps (21) considérés comme exempts de défauts sont modifiés dans leur trajectoire (6, 7).

6. Procédé selon l'une des revendications précédentes, dans lequel un deuxième tri consécutif au premier est effectué sur la trajectoire de vol des corps (21), dans la mesure où le premier tri n'a pas réussi.

7. Dispositif pour le transport et l'examen de de corps creux (21) cylindriques individuels à grande vitesse fermés d'un côté, de composants d'emballage et de précurseurs d'emballage, notamment de couvercles, présentant au moins une surface d'enveloppe et au moins une surface de couverture, quant à l'absence de défauts visuels et mécaniques, comprenant :
a) une unité d'examen (1), l'unité d'examen (1) comportant au moins une caméra de contrôle (4) et une unité de commande (3) reliée à celle-ci, ainsi qu'un dispositif de transport (11), le dispositif de transport (11) transportant les corps (21) doucement et sans oscillations ni inclinaison, à distance du sol et du plafond, devant au moins une caméra de contrôle (4) de l'unité d'examen (1), au moyen d'un défilement de bande parallèle à friction, tout en étant conçu au moins partiellement comme un guidage supérieur touchant en dernier les corps au niveau d'une position de bord, donc radialement à l'extérieur,
dans lequel le dispositif de transport (11) comporte deux bandes (12) précontraintes et entraînées, circulant respectivement autour d'une roue d'entraînement (15) et d'une autre roue (14), lesquelles définissent un trajet de transport entre elles, dans lequel le dispositif de transport (11) transporte les corps (21) individuellement et sans contact devant au moins une caméra de contrôle (4), dans lequel l'unité de commande (3) détermine la défectuosité de chaque corps (21) à l'aide des données d'image provenant de l'au moins une caméra de contrôle (4), et
b) comprenant en outre une unité de tri (5) fonctionnellement reliée à l'unité d'examen (1), dans lequel l'unité de tri (5) reçoit les corps (21) provenant de l'unité d'examen (1), dans lequel l'unité d'examen (1) ou l'unité de tri (5) éjecte librement les corps (21), dans lequel l'unité de tri (5) agit sur les trajectoires (6, 7) de corps (21) considérés comme défectueux et de corps (21) considérés comme exempts de défauts, l'une par rapport à l'autre, par application d'une force sans contact,
et dans lequel les corps (21) éjectés en vol libre sont, avant le tri, soumis à un contrôle latéral réalisé par des caméras de contrôle (10) orientées vers leur côté, dans lequel toutes les caméras de contrôle (4, 10) sont reliées à l'unité de commande et d'évaluation.

8. Dispositif selon la revendication 7, **caractérisé en ce que** le guidage supérieur se termine de façon conique ou en queue d'aronde, vu depuis le dessous, à son extrémité côté caméra.

9. Dispositif selon les revendications 7 à 8, **caractérisé en ce que** les bandes (12) du dispositif de transport (11) circulent en continu à des vitesses différentes l'une par rapport à l'autre.

10. Dispositif selon les revendications 7 à 9, **caractérisé en ce qu'**au moins une bande (12) est conçue comme une courroie dentée, de préférence les deux bandes (12), et/ou il est prévu une roue (14) en tant que roue de guidage et/ou une roue (14) en tant que deuxième roue d'entraînement (15) et/ou au moins une roue mobile (17) par bande (12).

11. Dispositif selon l'une des revendications 7 à 10, **caractérisé en ce que** l'au moins une caméra de contrôle (4, 10) est sélectionnée parmi les caméras plein jour, les caméras IR, les caméras IR refroidies, les capteurs de couleur, les capteurs destinés à déterminer la conformité d'une dimension ou de la dimension extérieure d'un corps (21), ou parmi plusieurs de celles-ci.

12. Dispositif selon l'une des revendications 7 à 11, **caractérisé en ce que** l'unité d'examen présente un deuxième trajet de transport (13) sur lequel les corps sont guidés côté sol et/ou plafond, ce trajet de transport (13) passant devant au moins une caméra de contrôle (4) orientée vers les corps.
